# EUROPEAN PATENT APPLICATION

(11) **EP 3 187 918 A1**
(43) Date of publication of application: **05.07.2017**
(21) Application number: 15307171.7
(22) Date of filing: 30.12.2015
(51) Int. Cl.: G02C 7/02

(54) **MARKING METHOD FOR MARKING AN OPTICAL ARTICLE DESTINED TO A WEARER**

(71) Applicant: ESSILOR INTERNATIONAL (COMPAGNIE GENERALE D'OPTIQUE), 94220 CHARENTON LE PONT (FR)
(72) Inventor: LIPPENS, Xavier, 94227 CHARENTON-LE-PONT CEDEX (FR); MAURICE, Sébastien, 94227 CHARENTON-LE-PONT CEDEX (FR)
(74) Representative: Cabinet Novitech

(57) **Abstract**

The invention relates to a marking method for marking an optical article destined to a wearer, the method comprising at least:
- an optical article providing step, during which the optical article is provided,
- an optical article data providing step, during which data about the optical article are provided, data comprising at least information relative to the orientation of the optical article when being worn by the wearer, and
- a marking step, during which a marking is formed upon the optical article, the marking being of an asymmetric configuration based on an information relative to the orientation of the ophthalmic article when being worn by the wearer.

## Description

### FIELD OF THE INVENTION

The invention relates to a marking method for marking an optical article destined to a wearer. The invention further refers to a manufacturing method configured to produce an optical article destined to a wearer comprising such a marking method. Another object of the invention is an optical article destined to a wearer marked according to the marking method.

### BACKGROUND OF THE INVENTION

It is well-known that certain steps of manufacturing optical articles such as ophthalmic lenses, require automatic orientation detection of lenses by a vision system.

Indeed, an ophthalmic lens is typically made of plastic or glass material and generally has two opposing surfaces which co-operate to provide a required corrective prescription.

Manufacturing of an ophthalmic lens to the required prescription requirements typically includes machining a face of a semi-finished lens. Typically, a semi-finished lens has a finished face, for example the front face and an unfinished face, for example the back face. By machining the back face of the lens to remove material, the required shape and positioning of the surface of the back face with respect to the surface of the front face for the desired corrective prescription can be generated.

The surface of the finished face of the semi-finished lens can be obtained by molding, machining or any other known means.

Conventionally, a semi-finished lens is provided with engraved markings on the finished face. The engraved markings define a reference system of the surface of the finished face of the semi-finished lens.

To implement a recognition step of marking, the vision system searches engravings present on the lens. To this end, a learning step of the vision system for each product is required. During the learning step, images of marking patterns to recognize are acquired, for example micro circles, product logo, addition value, and then stored on each vision system intended to be used.

This learning step can be long and must be renewed with each new optical product.

Furthermore, in the case of ophthalmic lenses, the marking patterns can depend on the manufacturer, on the distributor, on the type of optical article (optical design, lens type...), on the wearer for who the lens is destined (prescription, addition, wearer personalization...).

For example, for the optical article manufactured by the applicant, only the technical references defined according to ISO 8980-2, namely two reference points at 34 mm from each other for example micro-circles, are static and present in all products. The middle of the segment defined by the two reference points defines a point called the prism reference point (PRP).

Having identical logos on the optical article for each "eye" (right or left) in front of which the optical article is intended to be placed, is not sufficient to determine the direction (up / down) of the lens and the corresponding eye.

Therefore, there is a need for a marking method allowing an automatic and robust detection of the orientation of optical articles, and more particularly of ophthalmic articles, by vision system requiring a fast learning step.

### SUMMARY OF THE INVENTION

To this end, the invention proposes a marking method for marking an optical article destined to a wearer, the method comprising at least:
- an optical article providing step, during which the optical article is provided,
- an optical article data providing step, during which data about the optical article are provided, data comprising at least information relative to the orientation of the optical article when being worn by the wearer, and
- a marking step, during which a marking is formed upon the optical article, the marking being of an asymmetric configuration based on an information relative to the orientation of the ophthalmic article when being worn by the wearer.

Advantageously, such a marking on the optical article allows to determine in a robust and fast manner the orientation of the optical article regardless of the optical article. More particularly, in the case of ophthalmic lenses intended to be placed in front of an eye of a wearer, such a marking is self-supporting simultaneously of the up/down side indication and left/right lens indication, *i.e.* intended to be placed in front of respectively left/right eye.

Therefore, one may determine more easily and accurately the position of the referencing element and thus the reference system.

According to embodiments, the marking method according to the invention may further include one or any possible combination of the following features:
- data comprise information relating to the eye of the wearer in front of which the optical article is intended to be placed when being worn by the wearer;
- the marking is configured to be devoid of a first symmetrical axis and a second symmetrical axis respectively according to a vertical direction and a horizontal direction when the optical article is worn by the wearer;
- the marking comprises a first pattern if the optical article is intended to be placed in front of the right eye of the wearer and a second pattern different or not from the first one if the optical article is intended to be placed in front of the left eye of the wearer;
- the marking is configured to be asymmetrical relative to a vertical axis when the optical article is worn by the wearer;
- the marking is formed during a molding step of the optical article;
- the marking is formed by engraving of the optical article;
- the marking is formed by impression or inking upon a surface of the optical article;
- the marking is permanent;
- the optical article has or is destined to have at least an asymmetrical surface;
- the optical article is an ophthalmic article;
- the ophthalmic article is a finished lens or a semi-finished lens;
- the marking is formed during a customization step during which the ophthalmic article is customized according to wearer data, the wearer data comprising at least the wearer's prescription;
- the optical article is a mold adapted to produce a finished lens or a semi-finished lens.

The invention also relates to a manufacturing method configured to produce an optical article destined to a wearer comprising at least a marking method for marking an optical article according to the invention.

Another object of the invention is an optical article destined to a wearer comprising at least a marking of an asymmetric configuration based on an information relative to the orientation of the ophthalmic article when being worn by the wearer.

The invention further relates to a computer program product comprising one or more stored sequences of instructions that are accessible to a processor and which, when executed by the processor, causes the processor to carry out at least one of the steps of the marking method or the manufacturing method according to the invention.

The invention also relates to a computer-readable storage medium having a program recorded thereon; where the program makes the computer execute the method of the invention.

The invention further relates to a device comprising a processor adapted to store one or more sequence of instructions and to carry out at least one of the steps of the marking method or the manufacturing method according to the invention.

Unless specifically stated otherwise, as apparent from the following discussions, it is appreciated that throughout the specification discussions utilizing terms such as "computing", "calculating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computer or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The methods presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below.

In addition, embodiments of the present invention are not described with reference to any particular programming language. It will be appreciated that a variety of programming languages may be used to implement the teachings of the inventions as described herein.

### BRIEF DESCRIPTION OF THE DRAWINGS

Other characteristics and advantages of the invention will become more apparent from the claims and from the following description of some embodiments given by way of example without limitation with reference to the drawings, in which:
- Figure 1 illustrates a general flow chart of an embodiment of the display managing method according to the invention,
- Figure 2 illustrates a spectacle lens intended to be worn by a wearer and comprising two optical article each marked according to the marking method of figure 1.

Elements in the figures are illustrated for simplicity and clarity and have not necessarily been drawn to scale. For example, the dimensions of some of the elements in the figure may be exaggerated relative to other elements to help improve the understanding of the embodiments of the present invention.

### DETAILED DESCRIPTION OF PREFERRED EMBODIMENTS

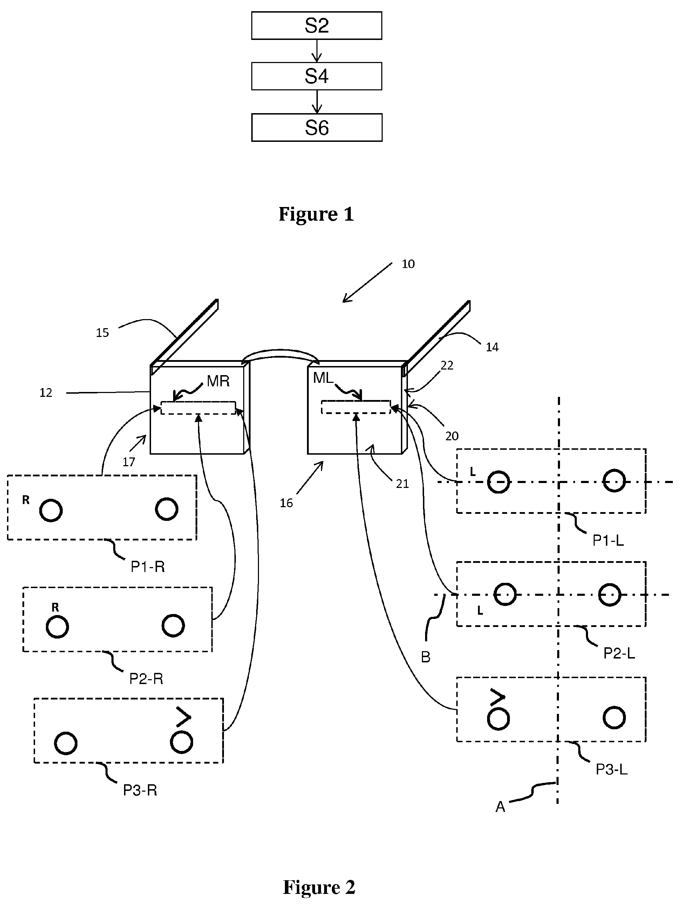

With reference to figure 1, a marking method for marking an optical article destined to a wearer according to the invention will now be detailed.

The marking method comprises:
- an optical article providing step S2,
- an optical article data providing step S4, and
- a marking step S6.

During the optical article providing step S2, the optical article is provided.

During the optical article data providing step S4, data about the optical article are provided. Data comprises at least information relative to the orientation of the optical article when being worn by the wearer. More particularly, data comprises at least an indication of the up/down side of the optical article intended to be worn by the wearer.

Advantageously, data comprise information relating to the eye of the wearer in front of which the optical article is intended to be placed when being worn by the wearer.

Then, a marking is formed upon the optical article during the marking step S6. The marking is of an asymmetric configuration based on an information relative to the orientation of the ophthalmic article when being worn by the wearer.

Advantageously, the optical article is an ophthalmic article, for example a finished lens or a semi-finished lens and the optical article has or is destined to have an asymmetrical surface or a symmetrical surface.

Subsequently, a preferred embodiment will be detailed in which the optical article is an ophthalmic article, also called lens by the end of the description.

Figure 2 illustrates an example implementation of a binocular device 10 adapted to a wearer. In this example, the frame is similar to a conventional eyeglasses frame and can be worn with a similar comfort level. However, other implementations are possible, such as a face shield which is mounted to the user's head by a helmet, strap or other means.

The frame comprises a frame front 12 and temples 14 and 15.

The frame front 12 holds a first lens 16 and a second lens 17, respectively designed to be placed in front of a first (left) and a second (right) eyes of the wearer.

The first lens 16 comprises at least a back face 20 and a front face 21. The second lens 17 also comprises a back face and a front face.

Advantageously, the first lens 16 and/or the second lens 17 can be adapted to the wearer's prescription, when the first and/or the second lenses 16, 17 are/is a see-through lens.

Each of the first or left lens 16 and the second or right lens 17 comprises at least a marking ML, MR of an asymmetric configuration based on an information relative to the orientation of the ophthalmic article when being worn by the wearer.

According to a preferred embodiment, each of the markings ML, MR is configured to be devoid of a first symmetrical axis and a second symmetrical axis respectively according to a vertical direction A and a horizontal direction B defined with reference to the frame when worn by the wearer

Consequently, a marking comprising only a circle should be avoided.

Figure 2 illustrates three examples of suitable patterns for the marking, for the right lens: P1-R, P2-R and P3-R and the corresponding pattern for the left lens: P1-L, P2-L and P3-L.

Advantageously, for each couple (right and left) of markings, the marking comprises a first pattern if the optical article is intended to be placed in front of the right eye of the wearer and a second pattern different from the first one if the optical article is intended to be placed in front of the left eye of the wearer.

In an alternative, for each couple (right and left) of markings, the marking comprises a first pattern if the optical article is intended to be placed in front of the right eye of the wearer and a second pattern identical from the first one if the optical article is intended to be placed in front of the left eye of the wearer.

According to the first example of marking, the marking comprises a character self-supporting simultaneously of the up/down side indication and left/right lens indication.

The character may further self support convex/concave lens indication.

For example, a character R can be marked on a lens destined to a right eye and a character L can be marked on a lens destined to a left eye.

These characters can be placed near engraved micro-markings defining a reference system of one surface of the lens, as micro-circles in the patterns P1-R, P2-R, P1-L and P2-L illustrated on figure 2.

Characters R and L are each asymmetric according to a vertical direction A and a horizontal direction B defined with reference to the frame when worn by the wearer. Consequently, it is easy to differentiate a right and a left lenses by identifying the character on a surface of the lens.

Furthermore, in an example, if the asymmetric marking is marked on a predetermined face of the optical article, for example the face which is intended to be the front face of the optical article when being worn by a wearer, it is also easy to differentiate the front face and the back face opposed to the front face by identifying the face supporting the marking or the face on which the character is readable in the case of the characters R and L. During the marking step, the face intended to support the marking is identified thanks to data comprising information relative to the orientation of the optical article when being worn by the wearer.

Furthermore, in another example, the asymmetric marking is an internal marking inside the optical article. In this case, the face supporting the marking is not decisive. The face on which the character is readable in case of the characters R and L allows to differentiate the back/front faces.

Consequently, such an example of marking P1-R/P1-L or P2-R/P2-L allows to easily differentiate the front/back faces, the right/left lenses and the orientation up/down of the optical article if the marked character is configured to be read in normal reading conditions. Thus, the indication of nasal/temporal side of the lens can be deduced from the previous information.

P3-R/P3-L illustrates a third example of an asymmetrical marking. The marking comprises two juxtaposed circles, the pattern ">"sits on top of one of the circles. For example, in the case of a marking for a right lens, the pattern ">"sits on top of the right circle.

In the same manner, if the marking is supported by the front face of the lens according to a convention predetermined before the marking step, it is easy to identify, the indication up/down of the lens and if it is a lens designed or to be designed for a left or right eye. The indication of nasal/temporal side of the lens can be deduced from the previous information.

According to a variant, if there is no convention determined for the face intended to support the asymmetrical marking, it is necessary to predetermined a convention related to the location of the marking on the lens, for example always on the nasal side. In this case, it is easy to identify first the indication of nasal/temporal side of the lens, then the indication up/down of the lens and if it is a lens designed or to be designed for a left or right eye. The indication relating to which one is the front or back faces can be deduced from the previous information.

The marking can be formed during a molding step of the optical article, or by engraving the optical article, or by inking upon a surface of the optical article.

Advantageously, the marking is permanent.

According to another embodiment, the optical article is a mold adapted to produce a finished lens or a semi-finished lens.

Furthermore, in the case wherein the optical article is an ophthalmic article, the marking can be advantageously formed during a customization step during which the ophthalmic article is customized according to wearer data, the wearer data comprising at least the wearer's prescription.

The invention has been described above with the aid of embodiments without limitation of the general inventive concept. Many further modifications and variations will suggest themselves to those skilled in the art upon making reference to the foregoing illustrative embodiments, which are given by way of example only and which are not intended to limit the scope of the invention, that being determined solely by the appended claims.

## Claims

1. A marking method for marking an optical article destined to a wearer, the method comprising at least:
- **an optical article providing step,** during which the optical article is provided,
- **an optical article data providing step,** during which data about the optical article are provided, data comprising at least information relative to the orientation of the optical article when being worn by the wearer, and
- **a marking step,** during which a marking is formed upon the optical article, the marking being of an asymmetric configuration based on an information relative to the orientation of the ophthalmic article when being worn by the wearer.

2. The marking method according to claim 1, wherein data comprise information relating to the eye of the wearer in front of which the optical article is intended to be placed when being worn by the wearer.

3. The marking method according to claim 1 or 2, wherein the marking is configured to be devoid of a first symmetrical axis and a second symmetrical axis respectively according to a vertical direction and a horizontal direction when the optical article is worn by the wearer.

4. The marking method according to claims 2 or 3, wherein the marking comprises a first pattern if the optical article is intended to be placed in front of the right eye of the wearer and a second pattern different or not from the first one if the optical article is intended to be placed in front of the left eye of the wearer.

5. The marking method according to any of the preceding claims 1 to 4, wherein the marking is formed during a molding step of the optical article.

6. The marking method according to any of the preceding claims 1 to 4, wherein the marking is formed by engraving of the optical article.

7. The marking method according to any of the preceding claims 1 to 4, wherein the marking is formed by inking upon a surface of the optical article.

8. The marking method according to any of the preceding claims 1 to 7, wherein the marking is permanent.

9. The marking method according to any of the preceding claims 1 to 8, wherein the optical article has or is destined to have at least an asymmetrical surface.

10. The marking method according to any of the preceding claims 1 to 9, wherein the optical article is an ophthalmic article.

11. The marking method according to claim 10, wherein the ophthalmic article is a finished lens or a semi-finished lens.

12. The marking method according to claim 10 or 11, wherein the marking is formed during a customization step during which the ophthalmic article is customized according to wearer data, the wearer data comprising at least the wearer's prescription.

13. The marking method according to any of the preceding claims 1 to 12, wherein the optical article is a mold adapted to produce a finished lens or a semi-finished lens.

14. A manufacturing method configured to produce an optical article destined to a wearer comprising at least a marking method for marking an optical article according to any of the preceding claims 1 to 13.

15. An optical article destined to a wearer comprising at least a marking of an asymmetric configuration based on an information relative to the orientation of the ophthalmic article when being worn by the wearer.
